# EUROPEAN PATENT SPECIFICATION

(11) **EP 4 019 278 B1**
(45) Date of publication and mention of the grant of the patent: **23.08.2023**
(21) Application number: 21214651.8
(22) Date of filing: 15.12.2021
(51) Int. Cl.: B60C 7/14, B60C 11/00

(54) **NON-PNEUMATIC TIRE**
LUFTLOSER REIFEN
PNEU NON PNEUMATIQUE

(30) Priority: 28.12.2020 JP 2020219329
(43) Date of publication of application: 29.06.2022
(73) Proprietor: Toyo Tire Corporation, Itami-shi, Hyogo 664-0847 (JP)
(72) Inventor: TAHARA, Hiroshi, Hyogo, 664-0847 (JP)
(74) Representative: Müller-Boré & Partner Patentanwälte PartG mbB

(56) References cited:
- JP-A- H04 218 405
- JP-A- 2005 067 236
- US-A1- 2017 368 881
- US-A1- 2018 001 699
- US-A1- 2019 070 904

## Description

### BACKGROUND OF THE INVENTION

### Field of the Invention

The present invention relates to a non-pneumatic tire.

### Related Art

In recent years, a non-pneumatic tire has been known for which the occurrence of punctures, etc. is not a problem. In general, a non-pneumatic tire has a structure in which a plurality of connecting portions arranged in the tire circumferential direction are connected between an outer annular portion and an inner annular portion provided concentrically inside the outer annular portion. A tread is provided at the outer periphery of the outer annular portion.

Conventionally, a non-pneumatic tire has been known in which a tread is constituted by a base rubber portion located on the inner side in the tire radial direction and a cap rubber portion located on the outer side in the tire radial direction from the base rubber portion (refer to, for example, PCT International Publication No. WO2016/114167). The tread includes a two-layer structure of the cap rubber portion, and the base rubber portion having lower rubber hardness than the cap rubber portion, so that the ground pressure when the tread grounds the road surface is dispersed in the base rubber portion.

Patent Document 1: PCT International Publication No. WO2016/114167

Document US 2017/368881 A1 describes a non-pneumatic tire which includes an attachment body that is attached to an axle, a ring-shaped body that surrounds the attachment body from an outside in a tire radial direction, a connection member that connects the attachment body and the ring-shaped body to each other. A cylindrical tread member is externally mounted on the ring-shaped body. The tread member includes a base rubber portion that is positioned at an inside in the tire radial direction and a cap rubber portion that is positioned at an outside of the base rubber portion in the tire radial direction. The rigidity of the base rubber portion is lower than the rigidity of the cap rubber portion.

Document JP 2005/067236 A1 discloses a pneumatic tire comprising a tread part having a cap rubber layer and a base rubber layer. An intermediate rubber layer is provided between the cap rubber layer and the base rubber layer. The thicknesses of the cap rubber layer, the intermediate rubber layer and the base rubber layer are 40 - 80%, 10 - 30% and 10 - 50%, respectively, of the total thickness of the tread part.

### SUMMARY OF THE INVENTION

However, since the tread contacts the outer annular portion via the base rubber portion having a lower rubber hardness than the cap rubber portion, the difference in hardness between the base rubber portion and the outer annular portion is large. Therefore, the difference in deformation amount between the tread and the outer annular portion while the tire is rolling increases, which may cause tread peeling. Therefore, conventional non-pneumatic tires have the issue of trying to enable prevention of the tread peeling while allowing the ground pressure during running to be dispersed by the tread.

Exemplary embodiments of the present invention provide a non-pneumatic tire that enables to prevent tread peeling while allowing the ground pressure during running to be dispersed by the tread.

The claimed invention is defined by the features set forth in the appended independent claim. Additional embodiments of the claimed invention are defined by the dependent claims.

According to exemplary embodiments of the present invention, it is possible to provide a non-pneumatic tire that enables to prevent tread peeling while allowing the ground pressure during running to be dispersed by the tread.

### BRIEF DESCRIPTION OF THE DRAWINGS

FIG. 1 is a front view of a non-pneumatic tire according to an exemplary embodiment of the present invention.
FIG. 2 is a cross-sectional view taken along the line A-A in FIG. 1.
FIG. 3 is a cross-sectional view taken along the line B-B in FIG. 2.
FIG. 4 is a cross-sectional view showing a detailed structure of a tread.

### DETAILED DESCRIPTION OF THE INVENTION

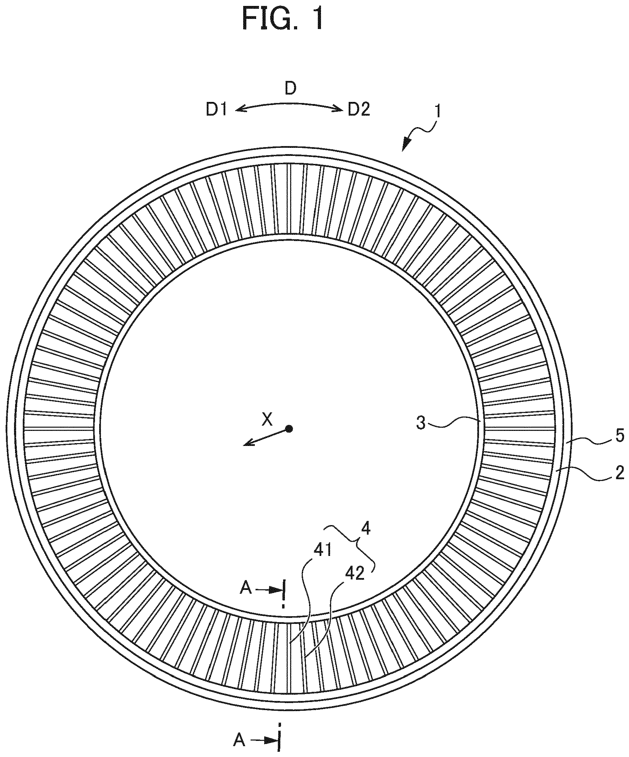

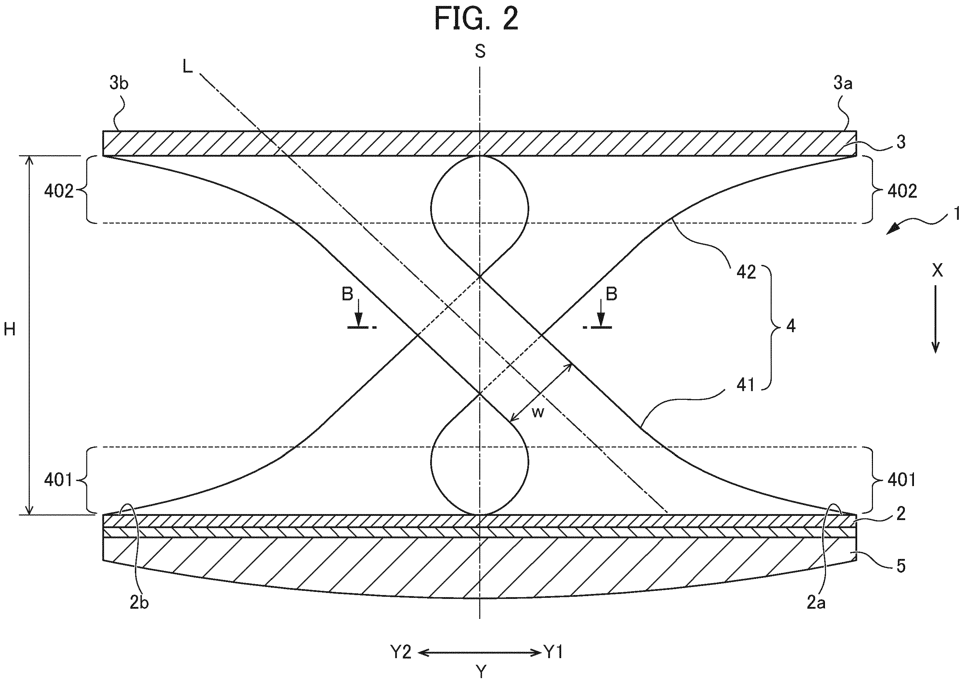

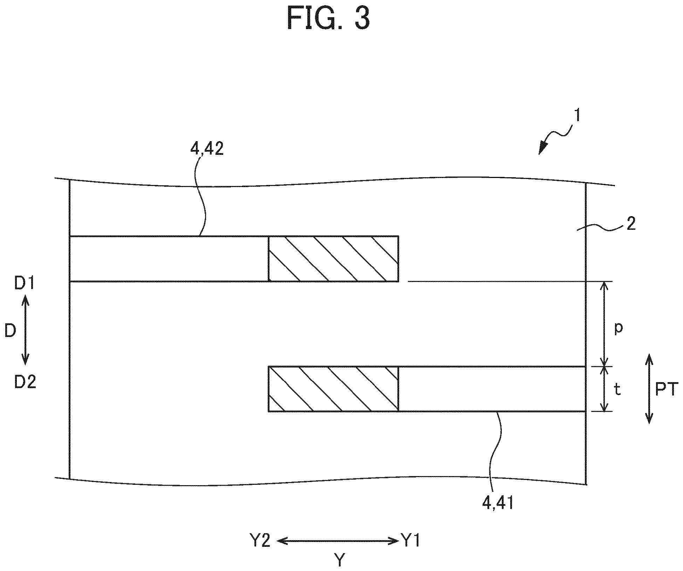

Exemplary embodiments of the present invention will be described below with reference to the drawings. FIG. 1 is a front view of an exemplary embodiment of a non-pneumatic tire of the present invention. FIG. 2 is a cross-sectional view taken along the line A-A in FIG. 1. FIG. 3 is a cross-sectional view taken along the line B-B in FIG. 2. A non-pneumatic tire 1 includes an outer annular portion 2, an inner annular portion 3 provided concentrically inside the outer annular portion 2, and a plurality of link parts 4 that each connect the outer annular portion 2 and the inner annular portion 3, and are provided independently along the tire circumferential direction D. The outer annular portion 2 has the outer periphery including a tread 5 provided thereon.

First, the outer annular portion 2 and the inner annular portion 3 will be described. It should be noted that, in the following, the thicknesses of the outer annular portion 2 and the inner annular portion 3 each refer to the plate thickness in the direction along the tire radial direction X shown in FIGS. 1 and 2. The widths of the outer annular portion 2 and the inner annular portion 3 each refer to the width in the direction along the tire width direction Y shown in FIG. 2.

The outer annular portion 2 has a constant thickness in the circumferential direction and the width direction from the viewpoint of improving the uniformity. The thickness of the outer annular portion 2 is not particularly limited; however, from the viewpoint of reducing weight and improving durability while sufficiently transmitting the force from the link parts 4, it is preferable that the thickness of the outer annular portion 2 is 2% or more and 7% or less, and more preferably 2% or more and 5% or less, of the tire cross-sectional height H shown in FIG. 2.

The inner diameter of the outer annular portion 2 is appropriately determined in accordance with the application or the like. For example, when assuming substitution of general pneumatic tires, the inner diameter of the outer annular portion 2 may be 420 mm or more and 750 mm or less.

The width of the outer annular portion 2 is appropriately determined in accordance with the application or the like. For example, when assuming substitution of general pneumatic tires, the width of the outer annular portion 2 may be 100 mm or more and 300 mm or less.

The inner annular portion 3 has a constant thickness in the circumferential direction and the width direction from the viewpoint of improving the uniformity. Although not shown, the inner circumferential surface of the inner annular portion 3 may include irregularities or the like for retaining the fitting property for mounting with the axle and rim. The thickness of the inner annular portion 3 is not particularly limited; however, from the viewpoint of improving the weight reduction and durability while sufficiently transmitting a force to the link parts 4, it is preferable that the thickness of the inner annular portion 3 be 2% or more and 7% or less, and more preferably 3% or more and 6% or less, of the tire cross-sectional height H shown in FIG. 2.

The inner diameter of the inner annular portion 3 is appropriately determined in accordance with the dimensions and the like of the rim and the axle to which the non-pneumatic tire 1 is mounted. For example, when assuming substitution of general pneumatic tires, the inner diameter of the inner annular portion 3 may be 250 mm or more and 500 mm or less.

The width of the inner annular portion 3 is appropriately determined according to the application, the length of the axle, and the like. For example, when assuming the substitution of general pneumatic tires, the width of the inner annular portion 3 may be 100 mm or more and 300 mm or less.

The link parts 4 are each a member serving as a spoke in the non-pneumatic tire 1 and connecting the outer annular portion 2 and the inner annular portion 3 so as to maintain a constant interval. The plurality of link parts 4 are independently arranged at regular intervals along the tire circumferential direction D. As shown in FIG. 1, the plurality of link parts 4 extend linearly in the radial direction along the tire radial direction X when the non-pneumatic tire 1 is viewed in the unloaded state from the front direction along the tire rotation axis.

The link part 4 is made of an elastic material. The elastic material refers to, for example, a material in which tensile modulus calculated from the tensile stress at 10% elongation is 100 MPa or less when subjected to a tensile test in accordance with JIS K7321. More specifically, from the viewpoint of imparting moderate stiffness while maintaining adequate durability, it is preferable that the tensile modulus is 5 MPa or more and 100 MPa or less, and more preferably 7 MPa or more and 50 MPa or less.

Examples of the elastic material used as the base material of the link part 4 include thermoplastic elastomers, crosslinked rubbers, and other resins.

Examples of the thermoplastic elastomer include polyester elastomer, polyolefin elastomer, polyamide elastomer, polystyrene elastomer, polyvinyl chloride elastomer, and polyurethane elastomer.

As the rubber material constituting the crosslinked rubber, any natural rubber and synthetic rubber can be used. Examples of the synthetic rubber include styrene butadiene rubber (SBR), butadiene rubber (BR), isoprene rubber (IIR), nitrile rubber (NBR), hydrogenated nitrile rubber (hydrogenated NBR), chloroprene rubber (CR), ethylene propylene rubber (EPDM), fluororubber, silicon rubber, acrylic rubber, and urethane rubber. Two or more of these rubber materials may be used in combination if necessary.

Examples of other resins include thermoplastic resins and thermosetting resins. Examples of the thermoplastic resin include polyethylene resins, polystyrene resins, and polyvinyl chloride resins. The thermosetting resins include, for example, epoxy resins, phenolic resins, polyurethane resins, silicon resins, polyimide resins, and melamine resins.

Among the above-mentioned elastic materials, a polyurethane resin is preferably used for the link parts 4 from the viewpoint of molding, processability and cost. It should be noted that a foamed material can also be used as the elastic material. In other words, those obtained by foaming the above-mentioned thermoplastic elastomer, crosslinked rubber, or other resins can be used. Furthermore, when the outer annular portion 2 and the inner annular portion 3 are made of resin, the link parts 4 may be formed integrally with the outer annular portion 2 and the inner annular portion 3 using the same resin material.

The plurality of link parts 4 according to the present exemplary embodiment are configured such that a first link part 41 and a second link part 42 are alternately arranged along the tire circumferential direction D. As shown in FIG. 2, the first link part 41 extends from one side Y1 in the tire width direction Y of the outer annular portion 2 toward the other side Y2 in the tire width direction Y of the inner annular portion 3. The second link part 42 extends from the other side Y2 in the tire width direction Y of the outer annular portion 2 toward the one side Y1 in the tire width direction Y of the inner annular portion 3. The first link part 41 and the second link part 42 adjacent to each other in the tire circumferential direction D are arranged in a substantially X-shape.

As shown in FIG. 2, the first link part 41 and the second link part 42 as viewed from the tire circumferential direction D have the same shape, and are symmetrical with respect to the tire equatorial plane S. Therefore, the specific shape of each link part 4 will be described using the first link part 41. It should be noted that the tire equatorial plane S refers to a plane perpendicular or substantially perpendicular to the tire rotation axis (tire meridian), and a plane located at the center in the tire width direction Y.

The link part 4 has an elongated plate shape extending obliquely toward the inner annular portion 3 from the outer annular portion 2. As shown in FIGS. 2 and 3, the link part 4 has a plate width w which is smaller than the plate thickness t, and the plate thickness direction PT is along the tire circumferential direction D. That is, the link part 4 has a plate shape extending in the tire radial direction X and the tire width direction Y. However, although not shown, the link part 4, may be disposed obliquely with respect to the tire circumferential direction D. It should be noted that the plate thickness t of the link part 4 refers to the thickness of the link part 4 along the tire circumferential direction D. The plate width w of the link part 4 refers to a width in the direction perpendicular or substantially perpendicular to the extending direction of the link part 4 when the link part 4 is viewed in the tire circumferential direction D. The link part 4 has such an elongated plate shape that, even in a case of a thin plate thickness t, it is still possible to improve the durability of the link part 4 having the thin plate thickness t by setting a wide plate width w. Furthermore, by increasing the number of the first link part 41 and the second link part 42 while reducing the plate thickness t, it is possible to reduce the gap between the link parts 4 and 4 adjacent to each other in the tire circumferential direction D while maintaining the rigidity of the entire tire. This makes it possible to reduce the ground pressure dispersion awhile the tire is rolling.

As shown in FIG. 2, the link part 4 has a shape in which a connecting portion 401 with the outer annular portion 2 and a connecting portion 402 with the inner annular portion 3 gently spread along the tire width direction Y, respectively. The link part 4 has a substantially constant plate width w between the connecting portions 401 and 402. The connecting portion 401 with the outer annular portion 2 of the first link part 41 is provided over a half area of the outer annular portion 2 in the tire width direction Y.

That is, the one side Y1 of the connecting portion 401 of the first link part 41 extends to an end portion 2a of the one side Y1 of the outer annular portion 2. The other side Y2 of the connecting portion 401 of the first link part 41 extends to the tire equatorial plane S disposed in the middle of the outer annular portion 2 in the tire width direction Y. The other side Y2 of the connecting portion 401 of the first link part 41 extends to an end portion 3b of the other side Y2 of the inner annular portion 3. The one side Y1 of the connecting portion 402 of the first link part 41 extends to the tire equatorial plane S disposed in the middle of the inner annular portion 3 in the tire width direction Y.

Similarly, the other side Y2 of the connecting portion 401 of the second link part 42 extends to an end portion 2b of the other side Y2 of the outer annular portion 2. The one side Y1 of the connecting portion 401 of the second link part 42 extends to the tire equatorial plane S disposed in the middle of the outer annular portion 2 in the tire width direction Y. The one side Y1 of the connecting portion 402 of the second link part 42 extends to an end portion 3a in the vicinity of the one side Y1 of the inner annular portion 3. The other side Y2 of the connecting portion 402 of the second link part 42 extends to the tire equatorial plane S disposed in the middle of the tire width direction Y of the inner annular portion 3.

The plate thickness t of the link part 4 is preferably 1 mm or more and 30 mm or less, and more preferably 5 mm or more and 25 mm or less, from the viewpoint that the link part 4 can easily bend and deform when a load is applied, while sufficiently transmitting the force from the outer annular portion 2 and the inner annular portion 3. The plate thickness t of the link part 4 may not be the same over the inner annular portion 3 from the outer annular portion 2. For example, in order for the link part 4 to easily deflect and to be easily deformed by a load, the plate thickness t of the link part 4 may be smaller than the plate thickness of a central portion in the vicinity of the connecting portion between the outer annular portion 2 and the inner annular portion 3.

The plate width w of the link part 4 is preferably 5 mm or more and 25 mm or less, and more preferably 10 mm or more and 20 mm or less, from the viewpoint of improving the reduction in weight and durability when a load is applied, while sufficiently transmitting the force from the outer annular portion 2 and the inner annular portion 3. In addition, the plate width w is preferably 110% or more of the plate thickness t, and more preferably 115% or more from the viewpoint of reducing the ground contact pressure dispersion while improving the durability. It should be noted that the plate thickness t of the link part 4 refers to the thickness of the link part 4 along the tire circumferential direction D. As shown in FIG. 2, the plate width w refers to a width in a direction perpendicular or substantially perpendicular to the extending direction L of the link part 4 obliquely from the outer annular portion 2 toward the inner annular portion 3.

The pitch p between the first link part 41 and the second link part 42 adjacent to each other in the tire circumferential direction D is preferably constant and small in the tire circumferential direction D. This makes it possible to reduce the external noise when the non-pneumatic tire 1 is rolling. More specifically, the pitch p is preferably 1 mm or more and 10 mm or less, and more preferably 1 mm or more and 5 mm or less. When the pitch p is greater than 10 mm, the ground pressure tends to become uneven in the tire circumferential direction D, and the vehicle external sound may be generated.

The number of the link parts 4 provided in the non-pneumatic tire 1 is preferably 80 or more and 300 or less, and more preferably 100 or more and 200 or less from the viewpoint of the improvement in weight reduction, power transmission, and durability while sufficiently supporting the load from the vehicle. FIG. 1 shows an example in which 50 pieces of first link parts 41 and 50 pieces of second link parts 42 are provided.

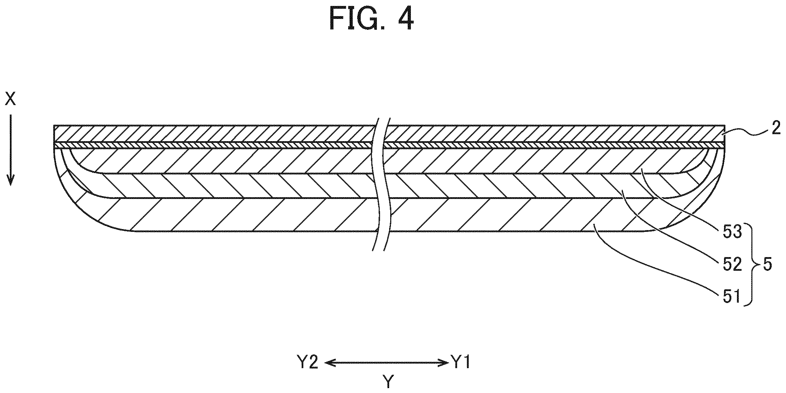

Next, a more detailed configuration of the tread 5 will be described with reference to a cross-sectional view of the tread 5 shown in FIG. 4. The tread 5 has a three-layer structure including a cap rubber 51 disposed on the outermost side in the tire radial direction X, a first base rubber 52 disposed more inwards in the tire radial direction X than the cap rubber 51, and a second base rubber 53 disposed more inwards in the tire radial direction X than the first base rubber 52. There is no limitation on the specific rubber material for use in the cap rubber 51, the first base rubber 52, and the second base rubber 53, and a vulcanized rubber or other rubbers commonly used as the tread of a tire can be used.

The cap rubber 51 covers the outside of the first base rubber 52 and the second base rubber 53 in the tire radial direction X over the entire circumference, and thus constitutes the outer peripheral surface of the tread 5. With such a configuration, the first base rubber 52 and the second base rubber 53 are not exposed at any of the tire radial direction X and the tire width direction Y. The outer peripheral surface of the cap rubber 51 may be provided with a tread pattern similar to that of a conventional pneumatic tire.

The first base rubber 52 is provided in contact with the cap rubber 51 over the entire circumference of the inner peripheral surface of the cap rubber 51. The first base rubber 52 is made of a rubber that is softer than the base rubber in the tread of a conventional non-pneumatic tire. The first base rubber 52 preferably has a constant thickness along the tire circumferential direction D from the viewpoint of improving uniformity.

The second base rubber 53 is provided in contact with the first base rubber 52 over the entire circumference of the inner peripheral surface of the first base rubber 52. The second base rubber 53 is provided over the entire circumference of the outer peripheral side of the outer annular portion 2. The second base rubber 53 is made of rubber that is harder than the base rubber in the tread of a conventional non-pneumatic tire. From the viewpoint of improving uniformity, the second base rubber 53 preferably has a constant thickness along the tire circumferential direction D.

The first base rubber 52 and the second base rubber 53 have different rubber hardnesses. Rubber hardness is based on JIS K6253 (2012) and is measured by durometer A. Specifically, when the rubber hardness of the first base rubber 52 is defined as Gb1 and the rubber hardness of the second base rubber 53 is defined as Gb2, the relationship of Gb1 < Gb2 is satisfied. As a result, it is possible for the first base rubber 52 to disperse the ground pressure applied to the cap rubber 51 and prevent the local concentration of the grounding pressure. Therefore, the durability and the steering stability of the tread 5 are improved. In addition, the hardness of the base rubber of the tread 5 gradually increases from the first base rubber 52 toward the second base rubber 53, and thus the hardness of the tread 5 is prevented from abruptly changing at the boundary with the outer annular portion 2 having hardness higher than that of the tread 5. Therefore, it is possible to suppress the difference in deformation amount between the base rubber when the tire is rolling (the first base rubber 52 and the second base rubber 53) and the outer annular portion 2, and thus it is possible to prevent the occurrence of tread peeling.

Furthermore, the first base rubber 52 mainly functions to disperse the ground pressure applied to the cap rubber 51. The second base rubber 53 mainly reinforces the outer annular portion 2 to improve the ring rigidity of the outer annular portion 2, such that the second base rubber 53 functions to effectively disperse the ground pressure concentrated directly below the link part 4. In particular, in a case in which the first link part 41 and the second link part 42 are provided so as to intersect each other as in the link parts 4 of the present exemplary embodiment, since the connection sites between the plurality of link parts 4 and the outer annular portion 2 are discontinuous in the tire circumferential direction D and the tire width direction Y, the ground pressure is easily concentrated directly below the link part 4 (the connection site between the first link part 41 and the second link part 42, and the outer annular portion 2). By the ring rigidity of the outer annular portion 2 being increased by the second base rubber 53, the ground pressure immediately below the link part 4 is dispersed, a result of which, during all traveling, the ground pressure is dispersed throughout the ground region of the tread 5, such that the durability and steering stability of the tread 5 is further improved.

The cap rubber 51 satisfies Gb1 < Gc when the rubber hardness of the cap rubber 51 is Gc. This ensures the wear resistance and impact resistance of the cap rubber 51.

It is preferable that the rubber hardness of the cap rubber 51, the first base rubber 52, and the second base rubber 53 satisfy 30 < Gb1 < Gc < Gb2 < 100 when the rubber hardness of the cap rubber 51 is Gc. The rubber hardness of the cap rubber 51, the first base rubber 52, and the second base rubber 53 constituting the tread 5 can be optimized, and the effects of the ground contact pressure dispersion and the prevention of the tread peeling can be more reliably obtained.

The specific hardnesses of each of the cap rubber 51, the first base rubber 52, and the second base rubber 53 are not particularly limited, and can be appropriately set within a range satisfying the above relationship. For example, the rubber hardness Gc of the cap rubber 51 may be 40 < Gc < 80. The first base rubber 52 may have a rubber hardness Gb1 of 30 < Gb1 < 70. The second base rubber 53 may have a rubber hardness Gb2 of 50 < Gb2 < 100. Although the hardness of the second base rubber 53 is lower than that of the outer annular portion 2, it is preferable that the hardness is close to that of the outer annular portion 2 from the viewpoint of reinforcing the outer annular portion 2 and increasing the ring rigidity of the outer annular portion 2.

It is preferable that the thickness of each of the cap rubber 51, the first base rubber 52, and the second base rubber 53 satisfies Tb2 <Tb1 ≤ Tc when the thickness of the cap rubber 51 is defined as Tc, the thickness of the first base rubber 52 is defined as Tb1, and the thickness of the second base rubber 53 is defined as Tb2. Since the first base rubber 52 is thicker than the second base rubber 53, it is possible to effectively disperse the ground pressure concentrated directly below the link part 4. In addition, since the thickness of the first base rubber 52 is equal to or less than the thickness of the cap rubber 51, it is possible to effectively disperse the ground contact pressure applied to the cap rubber 51 while securing the impact resistance of the cap rubber 51.

According to the non-pneumatic tire 1 of the exemplary present embodiment, the following advantageous effects are obtained.
(1) The non-pneumatic tire 1 according to the claimed invention is defined by the features set forth in the appended independent claim. With such a configuration, it is possible to disperse the ground contact pressure applied to the cap rubber 51 by the first base rubber 52, and prevent local concentration of the ground contact pressure. Therefore, the durability and the steering stability of the tread 5 are improved. In addition, the hardness of the base rubber of the tread 5 gradually increases from the first base rubber 52 toward the second base rubber 53, and thus the hardness of the tread 5 is prevented from abruptly changing at the boundary with the outer annular portion 2 having hardness higher than that of the tread 5. Therefore, it is possible to suppress the difference in deformation amount between the base rubber while the tire is rolling (the first base rubber 52 and the second base rubber 53) and the outer annular portion 2, and thus it is possible to prevent the occurrence of tread peeling. Also, the wear resistance and impact resistance of the cap rubber 51 are ensured.
(2) In the non-pneumatic tire 1 according to the present exemplary embodiment, Gb1, Gb2, and Gc are each durometer A hardness defined based on JIS K6253 (2012), and the relationship of 30 < Gb1 < Gc < Gb2 < 100 is satisfied. With such a configuration, the rubber hardnesses of the cap rubber 51, the first base rubber 52, and the second base rubber 53 constituting the tread 5 can be optimized, and the effects of the ground contact pressure dispersion and the prevention of the tread peeling can be more reliably obtained.
(3) In the non-pneumatic tire 1 according to the present exemplary embodiment, when the thickness of the cap rubber 51 is defined as Tc, the thickness of the first base rubber 52 is defined as Tb1, and the thickness of the second base rubber 53 is defined as Tb2, the relationship of Tb2 <Tb1 ≤ Tc is satisfied. Since the first base rubber 52 is thicker than the second base rubber 53, it is possible to effectively disperse the ground pressure concentrated directly below the link part 4. In addition, since the thickness of the first base rubber 52 is equal to or less than the thickness of the cap rubber 51, it is possible to effectively disperse the ground contact pressure applied to the cap rubber 51 while securing the impact resistance of the cap rubber 51.
(4) In the non-pneumatic tire 1 according to the present exemplary embodiment, the plurality of link parts 4 include first link parts 41 and second link parts 42 that are alternately provided along the tire circumferential direction D, the first link parts 41 each extending from one side Y1 in a tire width direction Y of the outer annular portion 2 toward one other side Y2 in the tire width direction Y of the inner annular portion 3, the second link parts 42 each extending from the other side Y2 in the tire width direction Y of the outer annular portion 2 toward the one side Y1 in the tire width direction Y of the inner annular portion 3. In such a configuration of the link part 4, since the connection sites between the plurality of link parts 4 and the outer annular portion 2 are discontinuous in the tire circumferential direction D and the tire width direction Y, the ground pressure is easily concentrated directly below the link part 4 (the connection site between the first link part 41 and the second link part 42, and the outer annular portion 2). However, according to the present exemplary embodiment, by the ring rigidity of the outer annular portion 2 being increased by the second base rubber 53, the ground pressure immediately below the link part 4 is dispersed. As a result, during all traveling, the ground pressure is dispersed throughout the ground region of the tread 5, such that the durability and steering stability of the tread 5 is further improved.

The plurality of link parts 4 of the non-pneumatic tire 1 shown in the above exemplary embodiment include the first link parts 41 and the second link parts 42 which are arranged so as to intersect in a substantially X-shape when viewed in the tire circumferential direction D; however, the present invention is not limited thereto. All the link parts 4 may be formed in a strip shape extending from the outer annular portion 2 over the inner annular portion 3. The strip-shaped link parts 4 may have the same width from the outer annular portion 2 toward the inner annular portion 3, or may have different widths between in the vicinity of the outer annular portion 2 and the vicinity of the inner annular portion 3. Furthermore, the plate thickness t of each link part 4 is not limited to the same thickness over the inner annular portion 3 from the outer annular portion 2, and the plate thickness t may be different between the vicinity of the outer annular portion 2 and the vicinity of the inner annular portion 3.

### EXPLANATION OF REFERENCE NUMERALS

1 non-pneumatic tire
2 outer annular portion
3 inner annular portion
4 link part
41 first link part
42 second link part
5 tread
51 cap rubber
52 first base rubber
53 second base rubber
D tire circumferential direction
X tire radial direction
Y tire width direction
Y1 one side
Y2 other side

## Claims

1. A non-pneumatic tire (1) comprising:
an outer annular portion (2) having an outer periphery including a tread (5) provided thereon;
an inner annular portion (3) provided concentrically inside the outer annular portion (2); and
a plurality of link parts (4) that each connect the outer annular portion (2) and the inner annular portion (3), and are provided independently along a tire circumferential direction (D),
wherein the tread (5) includes a cap rubber (51) disposed on an outermost side in a tire radial direction (X) and a first base rubber (52) disposed more inwards in the tire radial direction (X) than the cap rubber (51), and when a rubber hardness of the cap rubber (51) is defined as Gc, a rubber hardness of the first base rubber (52) is defined as Gb1, a relationship of Gb1 < Gc is satisfied,
**characterized in that** the tread (5) further includes a second base rubber (53) disposed more inwards in the tire radial direction (X) than the first base rubber (52), and
wherein, when a rubber hardness of the second base rubber (53) is defined as Gb2, a relationship of Gb1 < Gb2 is satisfied, wherein Gb1, Gb2 and Gc are each durometer A hardness defined based on JIS K6253 (2012).

2. The non-pneumatic tire (1) according to claim 1, wherein a relationship of 30 < Gb1 < Gc < Gb2 < 100 is satisfied.

3. The non-pneumatic tire (1) according to claim 1 or 2, wherein, when a thickness of the cap rubber (51) is defined as Tc, a thickness of the first base rubber (52) is defined as Tb1, and a thickness of the second base rubber (53) is defined as Tb2, Tb2 < Tb1 ≤ Tc is satisfied.

4. The non-pneumatic tire (1) according to any one of claims 1 to 3, wherein the plurality of link parts (4) include first link parts (41) and second link parts (42) that are alternately provided along the tire circumferential direction (D), the first link parts (41) each extending from one side (Y1) in a tire width direction (Y) of the outer annular portion (2) toward one other side (Y2) in the tire width direction (Y) of the inner annular portion (3), the second link parts (42) each extending from the other side (Y2) in the tire width direction (Y) of the outer annular portion (2) toward the one side (Y1) in the tire width direction (Y) of the inner annular portion (3).

## Patentansprüche

1. Luftloser Reifen (1), aufweisend:
einen äußeren ringförmigen Abschnitt (2) mit einem Außenumfang, der eine darauf bereitgestellte Lauffläche (5) aufweist;
einen inneren ringförmigen Abschnitt (3), der konzentrisch innerhalb des äußeren ringförmigen Abschnitts (2) bereitgestellt ist; und
eine Vielzahl von Verbindungsteilen (4), die jeweils den äußeren ringförmigen Abschnitt (2) und den inneren ringförmigen Abschnitt (3) verbinden und unabhängig entlang einer Reifenumfangsrichtung (D) bereitgestellt sind,
wobei die Lauffläche (5) ein Deckgummi (51), das auf einer äußersten Seite in einer Reifenradialrichtung (X) angeordnet ist, und ein erstes Basisgummi (52), das weiter innen in der Reifenradialrichtung (X) angeordnet ist als das Deckgummi (51), aufweist, und wenn eine Gummihärte des Deckgummis (51) als Gc definiert ist, eine Gummihärte des ersten Basisgummis (52) als Gb1 definiert ist, eine Beziehung Gb1 < Gc erfüllt ist,
**dadurch gekennzeichnet, dass** die Lauffläche (5) ferner ein zweites Basisgummi (53) aufweist, das weiter innen in der Reifenradialrichtung (X) angeordnet ist als das erste Basisgummi (52), und
wobei wenn eine Gummihärte des zweiten Basisgummis (53) als Gb2 definiert ist, eine Beziehung Gb1 < Gb2 erfüllt ist, wobei Gb1, Gb2 und Gc jeweils eine Durometerhärte A sind, die basierend auf JIS K6253 (2012) definiert ist.

2. Luftloser Reifen (1) nach Anspruch 1, wobei eine Beziehung 30 < Gb1 < Gc < Gb2 < 100 erfüllt ist.

3. Luftloser Reifen (1) nach Anspruch 1 oder 2, wobei wenn eine Dicke des Deckgummis (51) als Tc definiert ist, eine Dicke des ersten Basisgummis (52) als Tb1 definiert ist und eine Dicke des zweiten Basisgummis (53) als Tb2 definiert ist, Tb2 < Tb1 ≤ Tc erfüllt ist.

4. Luftloser Reifen (1) nach einem der Ansprüche 1 bis 3, wobei die Vielzahl von Verbindungsteilen (4) erste Verbindungsteile (41) und zweite Verbindungsteile (42) aufweisen, die abwechselnd entlang der Reifenumfangsrichtung (D) bereitgestellt sind, wobei sich die ersten Verbindungsteile (41) jeweils von einer Seite (Y1) in einer Reifenbreitenrichtung (Y) des äußeren ringförmigen Abschnitts (2) in Richtung einer anderen Seite (Y2) in der Reifenbreitenrichtung (Y) des inneren ringförmigen Abschnitts (3) erstrecken, wobei sich die zweiten Verbindungsteile (42) jeweils von der anderen Seite (Y2) in der Reifenbreitenrichtung (Y) des äußeren ringförmigen Abschnitts (2) in Richtung der einen Seite (Y1) in der Reifenbreitenrichtung (Y) des inneren ringförmigen Abschnitts (3) erstrecken.

## Revendications

1. Pneu non pneumatique (1) comprenant :
une partie annulaire extérieure (2) ayant une périphérie extérieure comprenant une bande de roulement (5) fournie dessus ;
une partie annulaire intérieure (3) fournie concentriquement à l'intérieur de la partie annulaire extérieure (2) ; et
une pluralité de pièces de liaison (4) qui relient chacune la partie annulaire extérieure (2) et la partie annulaire intérieure (3), et sont fournies indépendamment le long d'une direction circonférentielle du pneu (D),
dans lequel la bande de roulement (5) comprend un caoutchouc de recouvrement (51) disposé sur un côté le plus extérieur dans une direction radiale du pneu (X) et un premier caoutchouc de base (52) disposé plus à l'intérieur dans la direction radiale du pneu (X) que le caoutchouc de recouvrement (51), et lorsqu'une dureté de caoutchouc du caoutchouc de recouvrement (51) est définie comme Gc, une dureté de caoutchouc du premier caoutchouc de base (52) est définie comme Gb1, une relation de Gb1 < Gc est satisfaite,
**caractérisé en ce que** la bande de roulement (5) comprend en outre un deuxième caoutchouc de base (53) disposé plus à l'intérieur dans la direction radiale du pneu (X) que le premier caoutchouc de base (52), et
dans lequel, lorsqu'une dureté de caoutchouc du deuxième caoutchouc de base (53) est définie comme Gb2, une relation de Gb1 < Gb2 est satisfaite, Gb1, Gb2 et Gc étant chacune une dureté A au duromètre définie sur la base de la norme JIS K6253 (2012).

2. Pneu non pneumatique (1) selon la revendication 1, dans lequel une relation de 30 < Gb1 < Gc < Gb2 < 100 est satisfaite.

3. Pneu non pneumatique (1) selon la revendication 1 ou 2, dans lequel, lorsqu'une épaisseur du caoutchouc de recouvrement (51) est définie comme Tc, une épaisseur du premier caoutchouc de base (52) est définie comme Tb1, et une épaisseur du deuxième caoutchouc de base (53) est définie comme Tb2, Tb2 < Tb1 ≤ Tc est satisfaite.

4. Pneu non pneumatique (1) selon l'une quelconque des revendications 1 à 3, dans lequel la pluralité de pièces de liaison (4) comprend des premières pièces de liaison (41) et des deuxièmes pièces de liaison (42) qui sont disposées alternativement le long de la direction circonférentielle du pneu (D) , les premières pièces de liaison (41) s'étendant chacune d'un côté (Y1) dans une direction de largeur du pneu (Y) de la partie annulaire extérieure (2) vers un autre côté (Y2) dans la direction de largeur du pneu (Y) de la partie annulaire intérieure (3), les deuxièmes pièces de liaison (42) s'étendant chacune de l'autre côté (Y2) dans la direction de largeur du pneu (Y) de la partie annulaire extérieure (2) vers un côté (Y1) dans la direction de largeur du pneu (Y) de la partie annulaire intérieure (3).
